# EUROPEAN PATENT SPECIFICATION

(11) **EP 0 569 185 B1**
(45) Date of publication and mention of the grant of the patent: **24.03.1999**
(21) Application number: 93303242.7
(22) Date of filing: 26.04.1993
(51) Int. Cl.: F16L 55/165, E03F 3/04, E21D 11/38

(54) **Hollow tubular lining member for sewers and method of lining a sewer**
Hohles, rohrförmiges Auskleidungselement für Abwasserkanäle und Verfahren zum Auskleiden eines Abwasserkanals
Elément de revêtement tubulaire creux pour égouts et procédé de revêtement d'un égout

(30) Priority: 27.04.1992 GB 9209048
(43) Date of publication of application: 10.11.1993
(73) Proprietor: CHANNELINE SEWER SYSTEMS Ltd., Northfleet, Kent DA11 9SN (GB)
(72) Inventor: Florence, Geoffrey Lewis, Chatham, Kent ME4 6JF (GB)
(74) Representative: Charlton, Peter John

(56) References cited:
- CH-A- 446 209
- DE-A- 3 700 883
- DE-U- 9 007 444
- FR-A- 1 335 842
- GB-A- 1 165 339
- GB-A- 2 087 456

## Description

This invention relates to the lining of sewers, culverts, tunnels and like. Hereinafter, "sewers, culverts, tunnels and the like" shall be referred to and understood by "sewers". The invention relates to sewer lining and to a method for lining sewers.

Many existing sewers are primarily constructed of brick. Many such sewers have been in operation for over a century and are in urgent need of replacement or of reconstruction. There is thus a considerable demand for improved systems for lining sewers, so that existing constructions can be stabilized and their useful working life extended. Such a lining should be economical to produce and to install. It should also be effective to withstand corrosive materials and capable of withstanding a desired degree of loading.

Sewers are dividable into two size regimes which determine which lining methods can be used. These regimes are "man-entry" and "non-man-entry". When the cross-sectional size of a sewer is sufficiently large for a man to enter, then the lining can be installed in situ along the length of the sewer. For a non-man-entry sewer, the lining has to be fed in from one end. Formal definitions for the threshold dimensions dividing man-entry from non-man-entry exist, but these definitions vary from country to country. For example, in the United Kingdom the threshold is approximately 800mm by 500mm, and in Canada approximately 750mm by 500mm, for the largest and smallest transverse dimensions. In continental European countries such as Denmark, there is a larger threshold of approximately 1 meter diameter.

A prior art lining system for sewers is disclosed in UK patent number 2087456. The system there described is primarily of use for the lining of man-entry sewers.

Systems for forming pipelines from segmented rigid pipes are disclosed in UK patent publication number 2157344 A and UK patent publication number 2135005 A. GB 2157344 A describes the construction of a pipeline from a series of longitudinally abutting tubular segments, the segments being held together by a "sealing sleeve" located about the adjoining shoulders of abutting pipes. GB 2135005 A also teaches the use of pipe segments with shoulders. In this case, a heat shrunk sleeve is formed around the shoulders of abutting pipes to connect them. To prevent lateral movement of one pipe segment with respect to the other, dowel pins are used to connect adjacent pipe segments.

There are a range of different load regimes to which sewer linings need to be adapted, these regimes being determined by the location and the structural integrity of the existing sewer. In some circumstances, it is sufficient for the sewer lining merely to withstand ground water loading, that is, the external hydraulic head. However, in the most demanding case, the lining needs to withstand not only ground water loading but also road and ground loading. In this case, the lining itself must form part of a composite load bearing structure with the sewer.

Where the lining itself must form part of a composite load bearing structure with a sewer, it must be shaped relatively closely to the dimensions of the sewer, and the gap between the lining and the sewer must be filled with grout. In the man-entry case, the grout can be in-filled at locations along the sewer. However, in the non-man-entry case, in-filling of grout presents a particular problem. The grout and all components of the lining have to be forced into the sewer from one end. A conventional lining for such a purpose consists of a plurality of tubular segments connected to each other by spigot and socket joints. Such segments are fed into the sewer, spigot end first. When the lining is fully in place, the grout is then introduced. As the grout is highly viscous and has to pass through relatively small cross-sectional areas, the pumping pressure required is very high. This pressure is so great that the spigots and sockets are frequently forced slightly apart, with the result that grout can leak through the gaps thus created and collect on the inside of the lining. This is clearly undesirable, as it reduces the capacity of the sewer and may cause blockage.

The conventional solution is to use a mastic seal within the joint to fill the gap. This seal would be sufficiently resilient to block the gap even if the spigot and socket were forced apart under the grout pressure.

However, the pressure of insertion of the grout is so great that the mastic seal is itself forced inwards into the inside of the lining. Conventional lining methods thus do not present a satisfactory solution to the problem of lining non-man-entry sewers which need to withstand significant loading.

Accordingly, the invention provides a hollow tubular lining member for sewers, the lining member having a first end and a second end, the first end being adapted to engage with the second end of a similar member in use, wherein a resilient band is arranged at the outside of the second end of the lining member for overlapping and sealing said engagement, wherein a plurality of spacing members is arranged at the outside of the second end, the spacing members tapering outwardly in a direction away from the first end, and wherein the resilient band is arranged before use such that a first part thereof is around the second end and a second part thereof is turned back around the spacing members.

The invention also provides a method of lining a sewer, comprising the steps of:
inserting a first hollow tubular lining member into the sewer;
engaging a second hollow tubular lining member with the first hollow tubular lining member;
arranging a resilient band to externally overlap and seal the engagement between the first hollow tubular lining member and the second hollow tubular lining member; and
repeating the preceding steps in sequence, such that the second hollow tubular lining member takes the place of the first hollow tubular lining member and a further hollow tubular lining member takes the place of the second hollow tubular lining member; wherein each lining member is first inserted into the sewer by the first end thereof, and wherein a plurality of spacing members is arranged at the outside of the second end of said each lining member, the spacing members tapering outwardly in a direction away from the first end of said each lining member;
and wherein before the step of arranging a resilient band to overlap and seal each said engagement, said resilient band is arranged before use such that a first part thereof is around the second end of one of said hollow tubular lining members and a second part thereof is turned back around the spacing members of said one of lining members.

Use of the resilient band prevents the grout leakage found with prior art methods. The grout pressure acts to improve the seal by forcing the resilient band onto the lining members. By contrast, in conventional sealing methods grout pressure makes the seal less effective. The seal provided by the invention also prevents any material from entering between the joints, which material would itself contribute to forcing the two lining members apart and hence worsening the grout entry problem. The resilience of the seal prevents it from fracturing under the high pressures of the grout. While such a resilient band seal is particularly well adapted to use in the non-man-entry sewers, it may be used effectively in the lining of man-entry sewers also.

It is preferred that abutting lining members are arranged such that the second end of one lining member forms a seat for the first end of another lining member. The spigot and socket connection of conventional lining methods is such an arrangement. If an arrangement of this type is employed, the resilient band can advantageously be provided ready for use disposed about the seat, or socket, end of a lining member according to the invention.

Advantageously, each joint would be sealed by two means: a resilient band, and also an additional internal seal. Such an internal seal could be the mastic seal used in the conventional method. However, an alternative internal sealing method is particularly advantageous. This alternative seal is achieved by tapering the seat or socket end of a lining member, and fitting this tapered end with a preformed deformable lining element. The lined socket should then have at its outer end an internal diameter greater than the external diameter of a corresponding spigot. However, as the lining member tapers, this internal diameter reduces to below the external diameter of a corresponding spigot. On feeding lining members into a tunnel from one end, the longitudinal force between abutting lining members progressively increases. As this force increases, lining members are forced into closer abutment. The deformable lining element serves to centre each spigot in its socket. The lining element also progressively deforms to form an improved seal with increased longitudinal compression. A double seal with an outer resilient band and an inner deformable element is particularly desirable, as it enhances the capability of the sewer lining to withstand significant internal pressure, the resilient band being less effective against outward leakage from the pipe than against inward leakage into the pipe.

The use of a deformable lining element in the connection between adjacent abutting lining members is particularly advantageous in a wide range of sewer lining applications, and not merely the lining of non-man-entry sewers. This feature can be employed also in a technique particularly adapted to the lining of man-entry sewers, where the tubular lining elements may each be constructed of two or more sheets which when connected together along their length form a tube.

There are further aspects to the problem of lining non-man-entry sewers, especially where significant loading must be withstood. A sewer which requires lining is likely to be in a state of structural disrepair. There are likely to be fallen bricks on the sewer floor, and there may be hanging bricks or structural relaxation of the sewer roof and sides. These and other protrusions from the sewer walls can catch on the lining members, which may be prevented from passing through the sewer thereby. The lining member could catch part way along, affecting the integrity of one or more joints. When a resilient band is placed on the joints, sharp edges of the protrusions could cut at the band, either breaking it or making it prone to breakage under pressure.

These additional problems are satisfactorily addressed by the said arrangement of the plurality of spacing members at the second end of the lining member, the spacing members tapering outwardly in a direction away from the first end of the lining member.

These spacing members have a number of advantages. The spacing members protect the integrity of individual joints. They also reduce friction on the insertion of the member into the sewer. The spacing members prevent the lining member from floating in the grout; they ensure that the lining member remains centred within the sewer.

However, in combination with the resilient band seal, there is a significant extra advantage. If the spacing member is sufficiently long that it partially overhangs the second end, it will also overlap at least a part of the resilient band seal. The spacing member can then force away hanging bricks or other protrusions and thereby protect the band from damage.

The commonest shape for sewers is ovoid or egg-shaped, though sewers may also be circular or have some other curved form. The invention as described above can apply to any such lining shape. Where spacing members are utilized, these are preferably to be concentrated where the surface curvature of the lining is greatest. Typical numbers of spacing members on one segment might be six or eight, though greater or smaller numbers are also envisaged.

Advantageously, a conical leader unit can be placed on the front of the first lining member to allow the assembly to be easily inserted into a sewer.

Specific embodiments of the invention are described below by way of example, with reference to accompanying drawings.

Figure 1 shows a cross-sectional view in a plane containing the sewer axis of a joint of two lining members according to a first embodiment of the invention.

Figure 2 shows the view looking towards the socket end of a lining member as shown in Figure 1.

Figure 3 shows a cross-sectional view in the plane of the lining member axis of the socket end of a lining member as shown in figure 1 before use.

Figures 4a and 4b show cross-sectional views in a plane containing the sewer axis of a joint of two lining members according to an embodiment not covered by invention.

Figure 5 shows a cross-sectional view in the plane of the lining member axis of the socket end of a lining member according to a preferred embodiment of the invention.

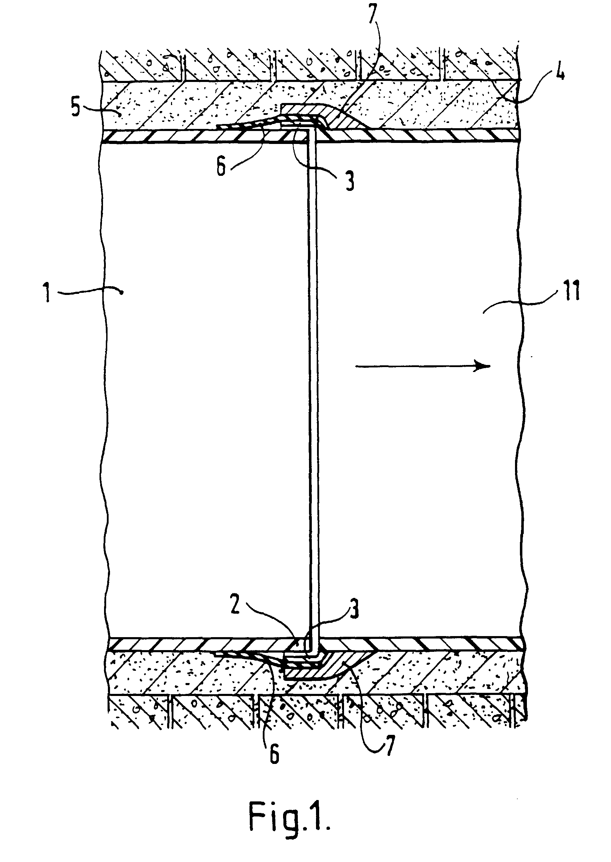

Figure 1 shows the detail of the joint between two tubular lining members according to the invention. One tubular member is pipe 1 which ends in a spigot 2 at its first end, which is fitted into a socket 3 on the second end of another similar pipe 11.

The joint between the spigot 2 and the socket 3 is protected by a resilient band in the form of rubber gaiter seal 6. Overlapping the seal 6 are centralizing lugs 7, which protect the rubber gaiter seal 6. The lugs 7 also serve to centralize the lining member within the sewer and reduce friction. The space between the lining pipes 1, 11 and the existing sewer wall 4 is filled by grout 5.

Pipes 1, 11 are preferably made of thermosetting resin. Advantageously, these made be formed by moulding a thermosetting polyester resin of the isophthalic type reinforced with glass fibres. Alternatively, the lining members may be made by extruding or injection moulding a thermoplastic resin such a polyvinylchloride.

The rubber gaiter seal 6 may be formed of either a natural or a synthetic rubber. A synthetic rubber such as polychloroprene, known commercially as Neoprene, is particularly preferred.

The grout 5 may be any cementaceous material used in the prior art for bonding sewer lining members and existing sewers together.

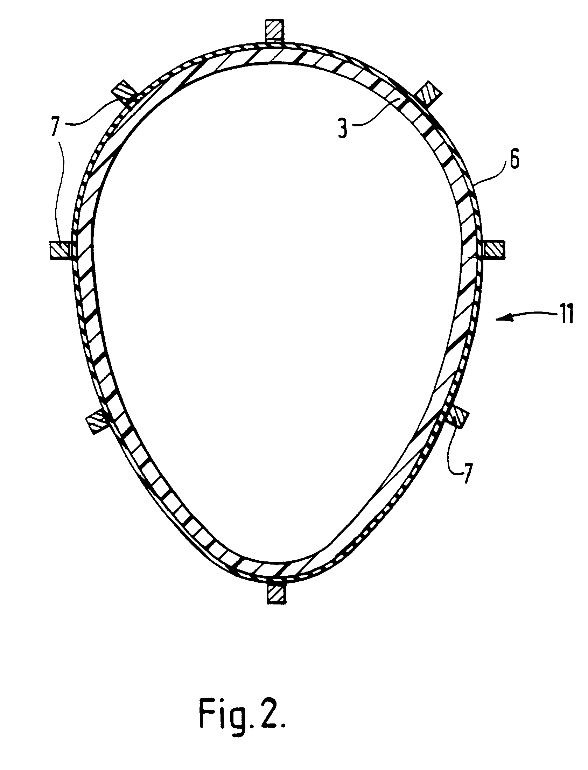

Figure 2 depicts the socket end of lining pipe 11. In this case, the lining is ovoid in cross-section; the shape of the lining is dependent on the shape of the sewer to which it is to be fitted. A typical disposition of centralizing lugs 7 is shown.

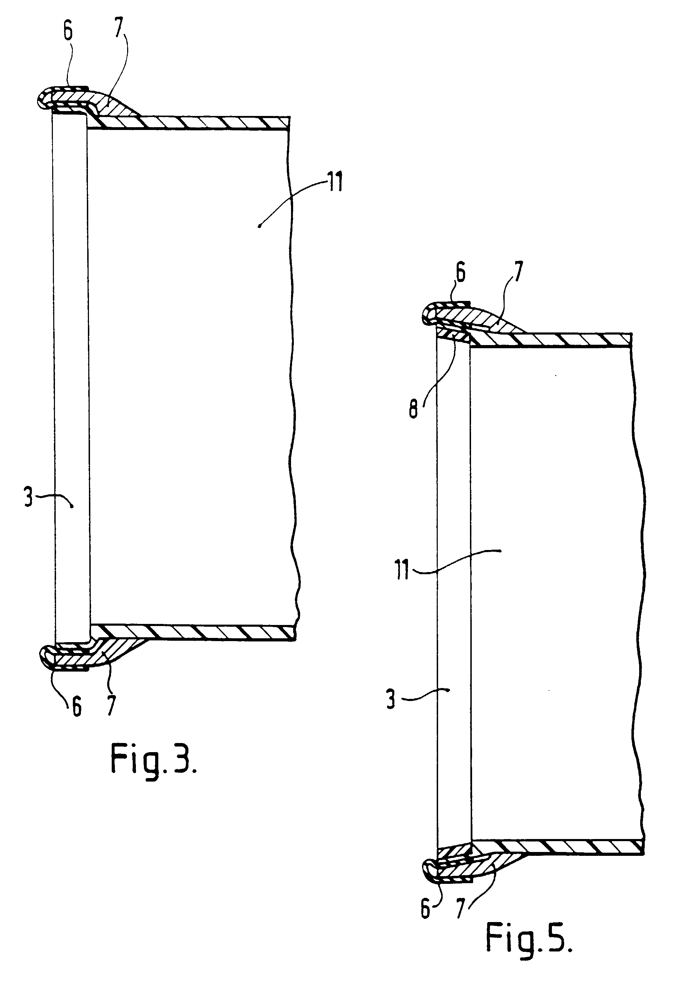

Figure 3 shows the socket end of a lining pipe before use. The rubber gaiter seal 6 is preferably fixed to the outer rim of the socket 3. The other end of the seal 6 is rolled back around the centralizing lugs 7.

A sewer can be lined as follows. Lining members are inserted into the sewer in the direction of the arrow in figure 1. Advantageously, the first member may be a leader unit with a conical front end (not shown) for pushing obstructions out of the path of the lining members. When one member has been inserted into the sewer, its socket end 3 will protrude from the entry to the sewer. The spigot end 2 of another lining member can then be inserted into the protruding socket 3. A mastic seal (not shown) may be placed within the socket 3, providing one seal between the two lining members. The resilient rubber gaiter 6 is placed to surround the connection between spigot and socket, sealing it completely. The socket 3 is provided with the rubber seal 6 which is advantageously fixed to its outer rim, and rolled off the centralizing lugs 7. The seal can then be rolled off the lugs 7 and onto the spigot end 2 of the adjoining lining member. The next lining member can then be forced into the sewer and so on until the sewer is fully lined. Grout 5 can then be pumped into the space between the lining and the sewer walls from one end of the sewer. The resilient seal 6 prevents ingress of grout 5 through the joints between lining members. The centralizing lugs 7 centre the lining members within the sewer and prevent them from floating to the top of the sewer in the grout. A non-man-entry sewer can thus be effectively lined with a lining which is bonded to it in order to withstand road and ground loading.

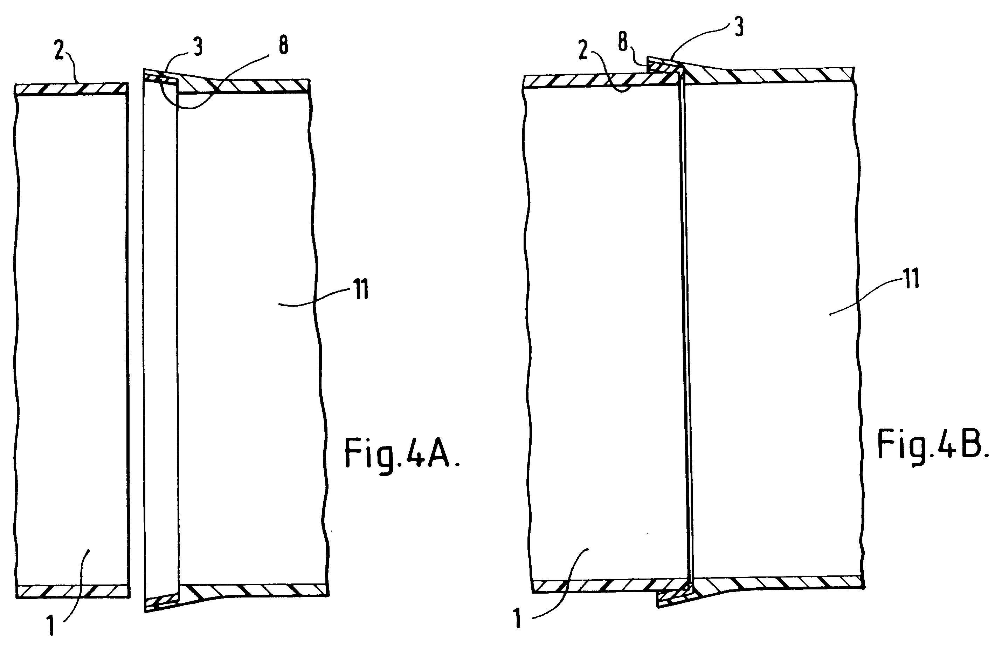

Figures 4a and 4b illustrate the internal seal according to an embodiment not covered by the invention. The spigot 2 is as shown in Figure 1, but the socket 3 has a different form from that in Figures 1 to 3. Socket 3 tapers outwards from the seat for the spigot, rather than merely increasing in internal diameter in one step at the seat to match the external diameter of the spigot. In this embodiment, the internal diameter of the socket increases progressively towards the end of the lining member.

The socket 3 is lined with a deformable lining element 8. This lining element 8 is preferably of substantially constant thickness, so that the internal diameter of the lining socket increases progressively towards the end of the lining member. Preferably, the lining element 8 extends over the whole length of the socket 3 from the seat to the end of the lining member. The outer diameter of the spigot 2 should be less than the internal diameter of the lined socket at the end of the lining member but greater than the internal diameter of the lined socket at the seat.

Figure 4a shows the spigot and socket before connection, and Figure 4b shows the spigot and socket after connection. As pipe 1 is advanced towards pipe 11, spigot 2 enters into the socket 3, and the end of spigot 2 presses upon deformable element 8. There will be a restoring force resetting from the deformation of element 8 which will act to centre the spigot 2 in the socket 3. The deformable element 8 will also form a seal between spigot 2 and socket 3. As pipe 1 is progressively urged towards pipe 11, advancement of spigot 2 into socket 3 will result in progressively greater deformation of the lining element 8. This increasing deformation serves both to increase the centring force acting on spigot 2 within the socket 3, and also to increase the effectiveness of the internal seal.

Internal deformable lining element 8 is preferably formed of a flexible closed cell elastomer. Such an elastomer could be expanded neoprene or polyurethane. It is however also possible to construct the deformable element 8 from a plastically deforming, rather than a resilient, material. A phenolic resin polymer is such a possibility.

These features are particularly advantageous when employed in combination with the invention as shown in Figure 5, which can be employed in exactly the same fashion as the embodiment of Figures 1 to 3.

## Claims

1. A hollow tubular lining member for sewers, the lining member (1) having a first end (2) and a second end (3), the first end being adapted to engage with the second end of a similar member in use, wherein a resilient band (6) is arranged at the outside of the second end (3) of the lining member (1) for overlapping and sealing said engagement wherein a plurality of spacing members (7) is arranged at the outside of the second end (3), the spacing members tapering outwardly in a direction away from the first end (2), and wherein the resilient band (6) is arranged before use such that a first part thereof is around the second end (3) and a second part thereof is turned back around the spacing members (7).

2. A hollow tubular lining member as claimed in claim 1, wherein the perimeter of the second end (3) has a larger diameter than that of the first end and is such as to form, in use, a seat for the first end (2) of another lining member (1).

3. A hollow tubular lining member as claimed in claim 1 or 2, wherein said spacing members (7) at least partially overhang the second end (3), whereby in use the resilient band (6) overlapping the said engagement is at least partially protected.

4. A hollow tubular lining member as claimed in any preceding claim, whereby the lining member tapers at the second end (3) outwardly in a direction away from the first end (2), and a tapered portion thereof is lined with a deformable lining element (8) such than the outer diameter of the first end is less than the diameter of the lined tapered portion at the outer end of the taper and is greater that the inner diameter of the lined tapered portion at the inner end of the taper.

5. A hollow tubular lining member as claimed in claim 4, wherein the deformable lining element (8) is a closed cell elastomer.

6. A method of lining a sewer, comprising the steps of:
inserting a first hollow tubular lining member into the sewer;
engaging a second hollow tubular lining member with the first hollow tubular lining member;
arranging a resilient band to externally overlap and seal the engagement between the first hollow tubular lining member and the second hollow tubular lining member; and
repeating the preceding steps in sequence, such that the second hollow tubular lining member takes the place of the first hollow tubular lining member and a further hollow tubular lining member takes the place of the second hollow tubular lining member; wherein each lining member is first inserted into the sewer by the first end thereof, and wherein a plurality of spacing members is arranged at the outside of the second end of said each lining member, the spacing members tapering outwardly in a direction away from the first end of said each lining member;
and wherein before the step of arranging a resilient band to overlap and seal each said engagement, said resilient band is arranged before use such that a first part thereof is around the second end of one of said hollow tubular lining members and a second part thereof is turned back around the spacing members of said one of lining members.

7. A method of lining a sewer as claimed in claim 6, further comprising the step of forming a mastic seal between the first hollow tubular lining member and the second hollow tubular lining member when making the engagement between the two.

8. A method of lining a sewer as claimed in claim 6 or 7, wherein said spacing members at least partially overhang the second end, whereby the resilient band overlapping and sealing each engagement is at least partially protected.

9. A method of lining a sewer as claimed in any of claims 6 to 8, wherein each hollow tubular lining member tapers at the second end thereof outwardly in a direction away from the second end thereof, and whereby a tapered portion thereof is lined with a deformable lining element such that the outer diameter of said first end is less than the diameter of said lined tapered portion at the outer end of said taper and is greater than the inner diameter of the lined tapered portion at the inner end of said taper.

## Patentansprüche

1. Hohles, rohrförmiges Auskleidungselement für Abwasserkanäle, wobei das Auskleidungselement (1) ein erstes Ende (2) und ein zweites Ende (3) aufweist, wobei das erste Ende so ausgestaltet ist, daß es beim Gebrauch in das zweite Ende eines ähnlichen Elementes eingreift, wobei ein elastisches Band (6) auf der Außenseite des zweiten Endes (3) des Auskleidungselementes (1) zum Überlappen und Abdichten des genannten Eingriffsbereiches angeordnet ist, wobei eine Mehrzahl von Abstandselementen (7) auf der Außenseite des zweiten Endes (3) angeordnet ist, wobei die Abstandselemente nach außen von dem ersten Ende (2) weg konisch zulaufen, und wobei das elastische Band (6) vor dem Gebrauch so angeordnet wird, daß ein erster Teil davon um das zweite Ende (3) verläuft und ein zweiter Teil davon zurück um die Abstandselemente (7) gelegt wird.

2. Hohles, rohrförmiges Auskleidungselement nach Anspruch 1, bei dem der Umfang des zweiten Endes (3) einen größeren Durchmesser hat als der des ersten Endes und so ausgestaltet ist, daß beim Gebrauch ein Sitz für das erste Ende (2) eines anderen Auskleidungselementes (1) entsteht.

3. Hohles, rohrförmiges Auskleidungselement nach Anspruch 1 oder 2, bei dem die genannten Abstandselemente (7) wenigstens teilweise über das zweite Ende (3) hängen, so daß beim Gebrauch das elastische Band (6), das den genannten Eingriffsbereich überlappt, wenigstens teilweise geschützt ist.

4. Hohles, rohrförmiges Auskleidungselement nach einem der vorherigen Ansprüche, bei dem das Auskleidungselement an dem zweiten Ende (3) nach außen von dem ersten Ende (2) weg konisch zuläuft, und ein konischer Abschnitt davon mit einem verformbaren Auskleidungselement (8) ausgekleidet ist, so daß der Außendurchmesser des ersten Endes kleiner ist als der Durchmesser des ausgekleideten konischen Abschnittes am äußeren Ende des Konus und größer ist als der Innendurchmesser des ausgekleideten konischen Abschnittes am inneren Ende des Konus.

5. Hohles, rohrförmiges Auskleidungselement nach Anspruch 4, bei dem das verformbare Auskleidungselement (8) ein geschlossenzelliges Elastomer ist.

6. Verfahren zum Auskleiden eines Abwasserkanals, umfassend die folgenden Schritte:
Einführen eines ersten hohlen rohrförmigen Auskleidungselementes in den Abwasserkanal;
In-Eingriff-Bringen eines zweiten hohlen rohrförmigen Auskleidungselementes mit dem ersten hohlen rohrförmigen Auskleidungselement;
Anordnen eines elastischen Bandes auf eine solche Weise, daß es den Eingriff zwischen dem ersten hohlen rohrförmigen Element und dem zweiten hohlen rohrförmigen Auskleidungselement außen überlappt und abdichtet; und
Wiederholen der vorherigen Schritte der Reihe nach, so daß das zweite hohle rohrförmige Auskleidungselement die Stelle des ersten hohlen rohrförmigen Auskleidungselementes annimmt und ein weiteres hohles rohrförmiges Auskleidungselement die Stelle des zweiten hohlen rohrförmigen Auskleidungselementes annimmt; wobei jedes Auskleidungselement zuerst mit seinem ersten Ende in den Abwasserkanal eingeführt wird, und wobei eine Mehrzahl von Abstandselementen an der Außenseite des zweiten Endes jedes genannten Auskleidungselementes angeordnet ist, wobei die Abstandselemente nach außen von dem ersten Ende jedes genannten Auskleidungselementes weg verlaufen;
und wobei vor dem Schritt des Anordnens eines elastischen Bandes zum Überlappen und Abdichten der einzelnen genannten Eingriffe das genannte elastische Band vor dem Gebrauch so angeordnet wird, daß ein erster Teil davon um das zweite Ende eines der genannten hohlen rohrförmigen Auskleidungselemente und ein zweiter Teil davon zurück um die Abstandselemente des genannten einen der Auskleidungselemente gelegt wird.

7. Verfahren zum Auskleiden eines Abwasserkanals nach Anspruch 6, ferner umfassend den Schritt des Bildens einer Mastixdichtung zwischen dem ersten hohlen rohrförmigen Auskleidungselement und dem zweiten hohlen rohrförmigen Auskleidungselement, wenn der Eingriff zwischen diesen beiden hergestellt wird.

8. Verfahren zum Auskleiden eines Abwasserkanals nach Anspruch 6 oder 7, bei dem die genannten Abstandselemente wenigstens teilweise über dem zweiten Ende hängen, so daß das elastische Band, das jeden Eingriffsbereich überlappt und abdichtet, wenigstens teilweise geschützt ist.

9. Verfahren zum Auskleiden eines Abwasserkanals nach einem der Ansprüche 6 bis 8, wobei jedes hohle rohrförmige Auskleidungselement an seinem zweiten Ende nach außen von seinem zweiten Ende weg konisch zuläuft, und wobei ein konischer Abschnitt davon mit einem verformbaren Auskleidungselement ausgekleidet wird, so daß der Außendurchmesser des genannten ersten Endes kleiner ist als der Durchmesser des genannten ausgekleideten konischen Abschnitts am äußeren Ende des genannten Konus und größer ist als der Innendurchmesser des ausgekleideten konischen Abschnittes am inneren Ende des genannten Konus.

## Revendications

1. Elément de revêtement tubulaire creux pour égouts, l'élément de revêtement (1) ayant une première extrémité (2) et une deuxième extrémité (3), la première extrémité étant adaptée pour s'engager avec la deuxième extrémité d'un élément similaire en utilisation, où une bande élastique (6) est disposée à l'extérieur de la deuxième extrémité (3) de l'élément de revêtement (1) pour assurer le recouvrement et l'étanchéité dudit engagement, où une pluralité d'éléments d'espacement (7) est disposée à l'extérieur de la deuxième extrémité (3), les éléments d'espacement diminuant vers l'extérieur dans une direction s'éloignant de la première extrémité (2), et où la bande élastique (6) est disposée avant utilisation de telle manière qu'une première partie de ladite bande est autour de la deuxième extrémité (3) et qu'une deuxième partie de ladite bande est repliée autour des éléments d'espacement (7).

2. Elément de revêtement tubulaire creux selon la revendication 1, dans lequel le périmètre de la deuxième extrémité (3) a un plus grand diamètre que la première extrémité et est tel qu'il forme, en utilisation, un siège pour la première extrémité (2) d'un autre élément de revêtement (1).

3. Elément de revêtement tubulaire creux selon la revendication 1 ou 2, dans lequel lesdits éléments d'espacement (7) chevauchent au moins partiellement la deuxième extrémité (3), grâce à quoi, en utilisation, la bande élastique (6) recouvrant ledit engagement est au moins partiellement protégée.

4. Elément de revêtement tubulaire creux selon l'une quelconque des revendications précédentes, où l'élément de revêtement diminue à la deuxième extrémité (3) vers l'extérieur dans une direction s'éloignant de la première extrémité (2), et une partie diminuée dudit revêtement est revêtue d'un élément de revêtement déformable (8) tel que le diamètre extérieur de la première extrémité est inférieur au diamètre de la partie diminuée revêtue à l'extrémité extérieure de la partie diminuée et supérieur au diamètre intérieur de la partie diminuée revêtue à l'extrémité intérieure de la partie diminuée.

5. Elément de revêtement tubulaire creux selon la revendication 4, dans lequel l'élément de revêtement déformable (8) est un élastomère à cellules fermées.

6. Procédé de revêtement d'un égout, comprenant les étapes suivantes :
introduction d'un premier élément de revêtement tubulaire creux dans l'égout;
engagement d'un deuxième élément de revêtement tubulaire creux avec le premier élément de revêtement tubulaire creux;
disposition d'une bande élastique pour qu'elle assure le recouvrement extérieur et l'étanchéité de l'engagement entre le premier élément de revêtement tubulaire creux et le deuxième élément de revêtement tubulaire creux; et
répétition des étapes précédentes dans l'ordre, de telle sorte que le deuxième élément de revêtement tubulaire creux prend la place du premier élément de revêtement tubulaire creux et qu'un autre élément de revêtement tubulaire creux prend la place du deuxième élément de revêtement tubulaire creux; où chaque élément de revêtement est d'abord introduit dans l'égout par sa première extrémité, et où une pluralité d'éléments d'espacement est disposée à l'extérieur de la deuxième extrémité de chacun desdits éléments de revêtement, les éléments d'espacement diminuant vers l'extérieur dans une direction s'éloignant de la première extrémité de chacun desdits éléments de revêtement;
et où, avant l'étape de disposition d'une bande élastique pour assurer le recouvrement et l'étanchéité de chacun desdits engagements, ladite bande élastique est disposée avant utilisation de telle sorte qu'une première partie de ladite bande est autour de la deuxième extrémité d'un desdits éléments de revêtement tubulaires creux et qu'une deuxième partie de ladite bande est repliée autour des éléments d'espacement dudit élément de revêtement.

7. Procédé de revêtement d'un égout selon la revendication 6, comprenant en outre l'étape de formation d'un joint d'étanchéité en mastic entre le premier élément de revêtement tubulaire creux et le deuxième élément de revêtement tubulaire creux en réalisant l'engagement entre les deux.

8. Procédé de revêtement d'un égout selon la revendication 6 ou 7, où lesdits éléments d'espacement chevauchent au moins partiellement la deuxième extrémité, de telle sorte que la bande élastique assurant le recouvrement et l'étanchéité de chaque engagement soit au moins partiellement protégée.

9. Procédé de revêtement d'un égout selon l'une quelconque des revendications 6 à 8, où chaque élément de revêtement tubulaire creux diminue à sa deuxième extrémité vers l'extérieur dans une direction s'éloignant de sa deuxième extrémité, et où une partie diminuée dudit élément est revêtue d'un élément de revêtement déformable tel que le diamètre extérieur de ladite première extrémité est inférieur au diamètre de ladite partie diminuée revêtue à l'extrémité extérieure de ladite partie diminuée, et supérieur au diamètre intérieur de la partie diminuée revêtue à l'extrémité intérieure de ladite partie diminuée.
